# EUROPEAN PATENT APPLICATION

(11) **EP 4 651 311 A1**
(43) Date of publication of application: **19.11.2025**
(21) Application number: 24741268.7
(22) Date of filing: 10.01.2024
(51) Int. Cl.: H01R 13/02, H01R 4/02

(54) **ELECTRIC CONNECTION ASSEMBLY**

(30) Priority: 10.01.2023 CN 202320073292 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2024/071481
(87) International publication number: WO 2024/149271

(57) **Abstract**

The present disclosure discloses an electrical connection assembly including a conductive member and a conductor. The conductive member includes a plugging portion and a connection portion that are sequentially connected, the connection portion has a connection surface on which two opposing rib portions are provided, opposing surfaces of the two rib portions and the connection surface jointly form a weld surface, and the conductor is at least partially overlapped with the weld surface to be welded to the conductive member. In the present disclosure, the opposing rib portions are provided on the connection surface of the conductive member, thereby increasing a contact area between the conductor and the conductive member during a welding process, and improving connection strength between the conductive member and the conductor.

## Description

### RELATED APPLICATIONS

This application claims priority of Chinese Utility Model Patent Application No. 202320073292.6, filed on January 10, 2023, the entire contents of which are incorporated herein by reference.

### TECHNICAL FIELD

The present disclosure relates to the technical field of electrically conductive metal connections, and more specifically, to an electrical connection assembly.

### BACKGROUND

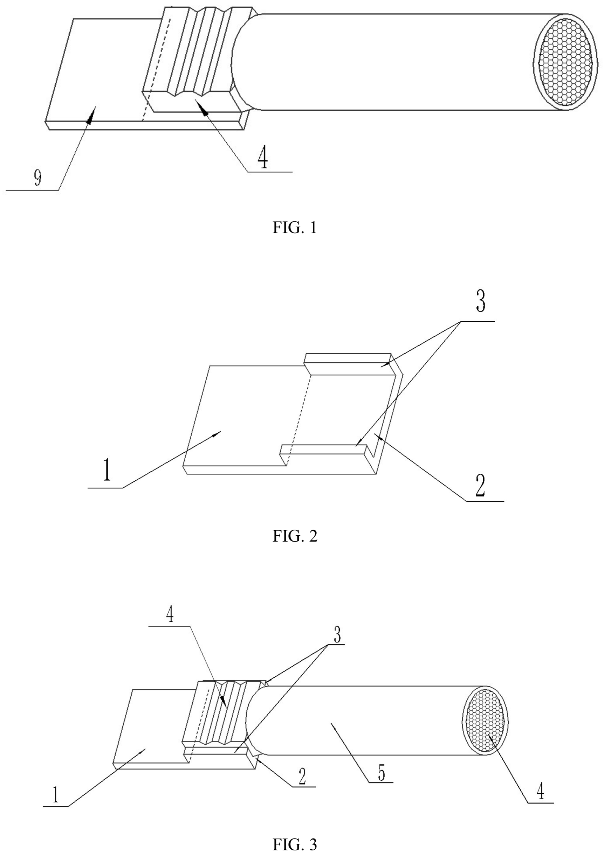

In the automobile industry, especially in recent years, with continuous soaring of copper price and continuous promoted and application and technological progress of aluminum material wires, a copper material in a wire harness is increasingly being replaced by an aluminum wire. Aluminum has the same excellent electrical conductivity, thermal conductivity, and plastic process property as copper. Therefore, copper-to-aluminum substitution is a main development trend at present. However, some properties of aluminum are still not as excellent as those of copper, and many components still may not be completely manufactured with aluminum instead of copper. Therefore, a conductive member and a conductor are generally connected by welding. As illustrated in FIG. 1, a conductive member 9 and a conductor 4 are connected by welding, and there is only one connection surface, so a contact area is small. Mechanical and electrical properties of a joint after welding according to this welding method may not implement a mechanical property obtained after connection with a large-cross-section aluminum wire conductor, and a new solution is needed to solve this problem.

### SUMMARY

An objective of the present disclosure is to provide an electrical connection assembly including a conductive member and a conductor, in which the conductive member includes a plugging portion and a connection portion that are sequentially connected, the connection portion has a connection surface on which two opposing rib portions are provided, opposing surfaces of the two rib portions and the connection surface jointly form a weld surface, and the conductor is at least partially overlapped with the weld surface to be welded to the conductive member.

Optionally, the rib portions and the connection portion are integrally formed by stamping.

Optionally, an angle between each of the rib portions and the connection portion is 90° to 135°.

Optionally, along a direction form the connection portion towards the plugging portion, a length of the rib portion is larger than or equal to an overlapping length of the conductor and the weld surface.

Optionally, at least one protrusion is provided at least on the connection surface along a direction perpendicular to the connection portion towards the plugging portion.

Optionally, two ends of the protrusion extend to the opposing surfaces of the two rib portions.

Optionally, multiple protrusions are provided at intervals along the direction from the connection portion towards the plugging portion.

Optionally, a vertical height of the rib portion to the connection surface is larger than or equal to a diameter of the conductor.

Optionally, an end of the connection portion opposite to the plugging portion is provided with a transition portion extending in a direction away from the weld surface.

Optionally, the conductor further includes an insulation layer sleeved on an outer periphery of the conductor, the conductor is welded to the weld surface after a part of the insulation layer is removed, and an end of the insulation layer is located in a region where the transition portion is located.

The present disclosure has at least the following technical effects:
1. In the present disclosure, the opposing rib portions are provided on the connection surface of the conductive member, thereby increasing a contact area between the conductor and the conductive member during a welding process, and further improving connection strength between the conductive member and the conductor.
2. By providing the protrusion serving as an energy transmission channel between the conductive member and the conductor during welding, energy of the conductive member and the conductor during welding is relatively concentrated, and a welding area between the connection portion 2 and the conductor 4 can be increased, thereby improving a welding effect between the conductive member and the conductor.
3. In order to ensure that a vertical height of the rib portion does not affect the wiring, the angle between each of the rib portions and the connection portion may be, for example, larger than 90°. The inventor sets the angle to be 90° to 135°. The rib portion is arranged in an inclined surface, which can make a contact area between the conductor and the rib portion larger, thereby improving mechanical properties between the conductive member and the conductor.

Other features and advantages of the present disclosure may become apparent from the following detailed description of exemplary embodiments of the present disclosure with reference to the accompanying drawings.

### BRIEF DESCRIPTION OF DRAWINGS

The accompanying drawings, which are incorporated in and constitute a part of this specification, illustrate embodiments of the present disclosure and, together with the description, serve to explain the principles of the present disclosure.
FIG. 1 is a schematic structural diagram of an electrical connection assembly described in the background art of the present disclosure.
FIG. 2 is a schematic structural diagram of a conductive member according to an embodiment of the present disclosure.
FIG. 3 is a schematic structural diagram of an electrical connection assembly according to the embodiment of the present disclosure.
FIG. 4 is a schematic structural diagram of a conductor according to the embodiment of the present disclosure.
FIG. 5 is a cross-sectional view of a connection between the conductive member and the conductor according to the embodiment of the present disclosure.
FIG. 6 is a cross-sectional view of another implementation of a connection between a conductive member and the conductor according to the embodiment of the present disclosure.
FIG. 7 is a schematic structural diagram of a conductive member with protrusions according to the embodiment of the present disclosure.
FIG. 8 is a schematic structural diagram of a conductive member with protrusions according to another embodiment of the present disclosure.
FIG. 9 is a cross-sectional view of a connection between a conductive member with an transition portion and a conductor according to the embodiment of the present disclosure.
FIG. 10 is a schematic structural diagram of the connection between the conductive member with the transition portion and the conductor according to the embodiment of the present disclosure.

The reference signs in the drawing are as follows:
1, plugging portion; 2, connection portion; 3, rib portion; 4, conductor; 5, insulation layer; 7, protrusion; 8, transition portion; 9, conductive member.

### DESCRIPTION OF THE EMBODIMENTS

Various exemplary embodiments of the present disclosure will now be described in detail with reference to the accompanying drawings. It should be noted that relative arrangement of components and steps, numerical expressions, and numerical values set forth in these embodiments do not limit the scope of the present disclosure unless specifically stated otherwise.

The following description of at least one exemplary embodiment is merely illustrative in nature and is in no way intended to limit the present disclosure, its application, or its uses.

Techniques, methods, and devices known to a person skilled in the art may not be discussed in detail, but where appropriate, the above-described techniques, methods, and devices should be considered as part of the specification.

In all of examples illustrated and discussed herein, any specific value should be interpreted as exemplary only and not as limiting. Therefore, other examples of exemplary embodiments may have different values.

As illustrated in FIGS. 2 to 10, an electrical connection assembly includes a conductive member 9 and a conductor 4. The conductive member 9 includes a plugging portion 1 and a connection portion 2 that are sequentially connected, the connection portion 2 has a connection surface on which two opposing rib portions 3 are provided, opposing surfaces of the two rib portions 3 and the connection surface jointly form a weld surface, and the conductor 4 is at least partially overlapped with the weld surface to be welded to the conductive member 9, optionally by ultrasonic welding.

Compared with the structure as illustrated in FIG. 1 mentioned in the background art, in the present disclosure, the opposing rib portions 3 are provided on the connection surface of the conductive member 9, which can increase a contact area between the conductor 4 and the conductive member 9 during a welding process, thereby improving connection strength between the conductive member 9 and the conductor 4, and implementing connection performance with a large-cross-section conductor.

In order to verify that the connection strength between the conductive member 9 with the rib portions 3 and the conductor 4 in the electrical connection assembly is better than the connection strength of an electrical connection assembly without the rib portions 3, the inventor sets up the following experiments to test a pulling force and a tearing force.

The conductive member 9 used in the experiments is made of a copper material having a thickness of 2.0 mm, and the conductor 4 is an 85 mm² aluminum wire.

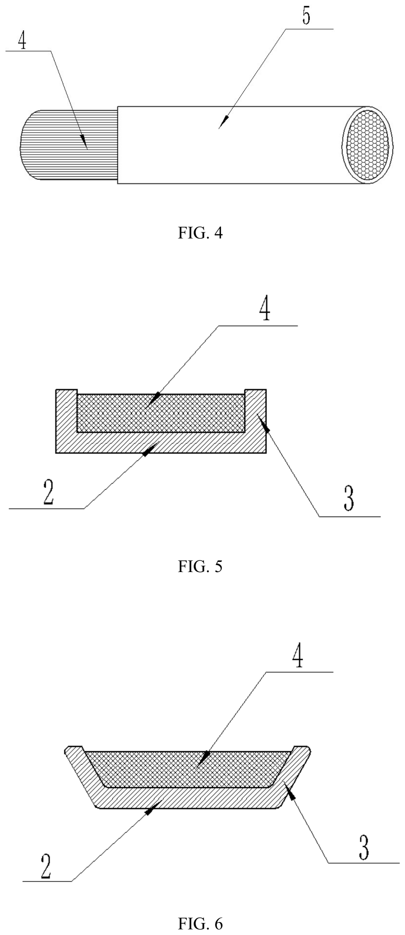

Equipment used includes high-power ultrasonic equipment, a punching machine, a water-polishing machine, a stripping and cutting machine, and a tensile machine. Specific steps include:
(1) as illustrated in FIGS 2 to 4, punching using the punching machine to form a shape of the conductive member 9 illustrated in FIG. 2, where 1 is a plugging portion, 2 is a connection portion, and the connection portion 2 has the connection surface and includes the rib portions 3;
(2) as illustrated in FIG. 4, performing cutting, stripping, and adhesive retention on the conductor 4 covered with an insulation layer 5 with a stripping length of 20 mm, where 4 is an aluminum wire conductor, and 5 is an insulation layer of a terminal;
(3) adjusting an ultrasonic welding parameter, welding two groups of electrical connection assembly samples, one of the two groups being electrical connection assembly without the rib portions 3 as illustrated in FIG. 1 and the another of the two groups being electrical connection assembly with the rib portions 3 as illustrated in FIG. 3, respectively, each group including 10 samples, and the conductive member 9 and the conductor 4 are ultrasonically welded to obtain a structure as illustrated in FIG. 3;
(4) testing mechanical properties of each structure obtained by welding the conductive member 9 and the conductor 4 using the tensile machine, with results illustrated in Tables 1 and 2.

**Table 1 Pulling Force Test**

| Sequence number | 1 | 2 | 3 | 4 | 5 |
|---|---|---|---|---|---|
| Without rib portions | 2985 N | 3156 N | 3035 N | 2825 N | 3152 N |
| With rib portions | 4032 N | 4121 N | 4455 N | 4279 N | 4126 N |

| Sequence number | 6 | 7 | 8 | 9 | 10 |
|---|---|---|---|---|---|
| Without rib portions | 3046 N | 3158 N | 3264 N | 3184 N | 3098 N |
| With rib portions | 4359 N | 4374 N | 4065 N | 4145 N | 4065 N |

**Table 2 Tearing Force Test**

| Sequence number | 1 | 2 | 3 | 4 | 5 |
|---|---|---|---|---|---|
| Without rib portions | 518 N | 489 N | 635 N | 625 N | 472 N |
| With rib portions | 756 N | 814 N | 796 N | 968 N | 698 N |
| | | | | | |

| Sequence number | 6 | 7 | 8 | 9 | 10 |
|---|---|---|---|---|---|
| Without rib portions | 546 N | 558 N | 664 N | 584 N | 498 N |
| With rib portions | 786 N | 856 N | 857 N | 769 N | 928 N |

It can be seen from the above-described test results that after the conductive member 9 with the rib portions 3 and the conductor 4 are welded, the pulling force and the tearing force in the tests are significantly larger than those after the conductive member 9 without the rib portions 3 and the conductor 4 are welded, which can further prove that the connection strength between the conductive member 9 and the conductor 4 can be improved by providing the rib portions 3, making connection of the electrical connection assembly more stable.

In an embodiment, the rib portions 3 and the connection portion 2 are integrally formed by stamping.

The rib portions 3 may be welded to the connection portion 2. Optionally, the rib portions 3 and the connection portion 2 are integrally formed by stamping, and an integral structure can not only save a cost of the conductive member 9, but also increase welding strength between the conductive member 9 and the conductor 4.

In an embodiment, as illustrated in FIGS. 5 and 6, an angle between each of the rib portions 3 and the connection portion 2 is 90° to 135°. In an ultrasonic welding process, a multi-core conductor 4 is generally used. In order to ensure that a vertical height of the rib portion 3 does not affect the wiring, the angle between each of the rib portion 3 and the connection portion 2 may be, for example, larger than 90°. The inventor sets the angle to be 90° to 135°. The rib portion 3 is arranged in an inclined surface, which can make a contact area between the conductor 4 and the rib portion 3 larger, thereby improving the mechanical properties between the conductive member 9 and the conductor 4. Optionally, the inventor sets the angle between each of the rib portions 3 and the connection portion 2 to be 90°, 100°, 110°, 120°, 135°, etc.

Further, along a direction from the connection portion 2 faces towards the plugging portion 1, such as a left-right direction as illustrated in FIG. 3, a length of the rib portion 3 is larger than or equal to an overlapping length of the conductor 4 and the weld surface, which is more beneficial to increase the connection strength between the conductive member 9 and the conductor 4.

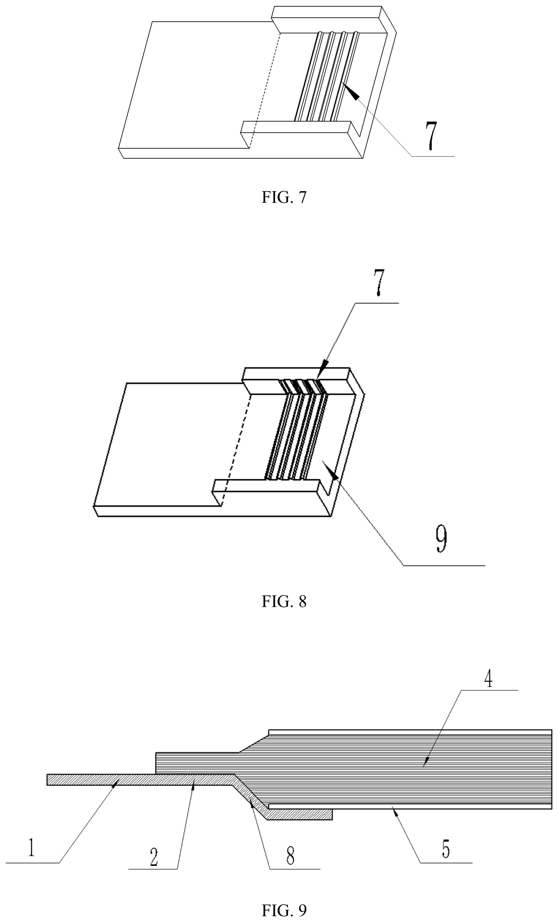

In an embodiment, as illustrated in FIGS. 7 to 8, at least one protrusion 7 is provided at least on the connection surface in a direction perpendicular to a direction from the connection portion 2 towards the plugging portion 1. Taking the ultrasonic welding as an example throughout, but not limited to the ultrasonic welding, the protrusion 7 herein may be integrally provided with the connection portion 2, or may be the protrusion 7 stacked on the connection surface. By providing the protrusion 7 serving as an energy transmission channel between the conductive member 9 and the conductor 4 during welding, energy of the conductive member 9 and the conductor 4 during welding is relatively concentrated, and a welding area between the connection portion 2 and the conductor 4 can be increased, thereby improving a welding effect between the conductive member 9 and the conductor 4.

Further, in order to improve the welding effect between the conductive member 9 and the conductor 4, two ends of the protrusion 7 extend to the opposing surfaces of the two rib portions 3.

Further, there are a plurality of protrusions 7, and the protrusions 7 are provided at intervals along the direction from the connection portion 2 towards the plugging portion 1.

It can be knew from a working principle of the ultrasonic welding that, during the ultrasonic welding process, under a combined effect of welding static pressure and ultrasonic high-frequency vibration, high-frequency friction occurs on a weld surface of a workpiece to be welded (the conductive member 9 and the conductor 4, where the conductive member 9 may be a copper terminal or an aluminum terminal, and the conductor 4 is a single-core aluminum wire or a multi-core aluminum wire), resulting in high-rate plastic deformation and rapid temperature rise, thereby breaking and removing an oxide film and contaminants on an interface, allowing pure exposed metal atoms to come into contact and form a welding bond in a form of a metal bond. Under different temperature conditions, plastic flow ability of the metal is different, and interface formation is also different. During the ultrasonic welding process, welding energy, amplitude, and static welding pressure can affect the friction at the interface in different ways, which in turn directly affects friction heat generation at the interface and the plastic flow ability of the metal, thereby affecting quality of the electrical connection assembly.

Therefore, in the above-described embodiment, at least one protrusion 7 structure is used. When there is more than one protrusion 7 structure, a tangential friction force of a workpiece welding region is increased by two interval protrusions 7 to obtain more energy, so that a temperature of the welding region is increased, thereby improving the plastic fluidity between the metals and the connection strength between the conductive member 9 and the conductor 4.

In an embodiment, in order to ensure that the conductor 4 is completely fitted to the weld surface, the inventor sets a vertical height of the rib portion 3 to the connection surface to be larger than or equal to a diameter of the conductor 4.

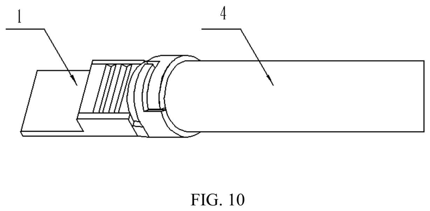

In an embodiment, as illustrated in FIG. 9, an end of the connection portion 2 opposite to the plugging portion 1 is provided with a transition portion 8 extending in a direction away from the weld surface. As illustrated in FIGS. 9 and 10, the conductor 4 further includes the insulation layer 5 sleeved on an outer periphery of the conductor 4, the conductor 4 is welded to the weld surface after a part of the insulation layer 5 is removed, and an end of the insulation layer 5 is located in a region where the transition portion 8 is located.

In a process of welding the connection portion 2 and the conductor 4, there is a risk of the conductor 4 breaking at a joint (as illustrated in FIG. 3). The transition portion 8 is provided to completely accommodate the conductor 4 and a portion of an insulation layer in the conductive member 9, thereby avoiding the risk of the conductor 4 breaking. The transition portion 8 may be, for example, in a bent form. The bent conductive member 9 may wrap the insulating layer outside the conductor 4, thereby improving stability of an electrical connection between the conductive member 9 and the conductor 4.

Further, as illustrated in FIG. 10, an end of the transition portion 8 wraps the insulation layer, which further improving the stability of the connection between the conductive member 9 and the conductor 4.

Although some specific embodiments of the present disclosure have been described in detail through examples, a person skilled in the art should understand that the above-described examples are only for a purpose of illustration, and are not intended to limit the scope of the present disclosure. A person skilled in the art should understand that the above-described embodiments may be modified without departing from the scope and spirit of the present disclosure. The scope of the present disclosure is defined by the appended claims.

## Claims

1. An electrical connection assembly, comprising a conductive member; and a conductor, wherein
the conductive member comprises a plugging portion and a connection portion that are sequentially connected, the connection portion has a connection surface on which two opposing rib portions are provided, opposing surfaces of the two rib portions and the connection surface jointly form a weld surface, and the conductor is at least partially lapped over the weld surface to be welded to the conductive member.

2. The electrical connection assembly according to claim 1, wherein
the rib portions and the connection portion are integrally formed by stamping.

3. The electrical connection assembly according to claim 1, wherein
an angle between each of the rib portions and the connection portion is 90° to 135°.

4. The electrical connection assembly according to claim 1, wherein
along a direction from the connection portion towards the plugging portion, a length of the rib portion is larger than or equal to an overlapping length of the conductor and the weld surface.

5. The electrical connection assembly according to claim 1, wherein
at least one protrusion is provided at least on the connection surface in a direction perpendicular to a direction from the connection portion towards the plugging portion.

6. The electrical connection assembly according to claim 5, wherein
two ends of the protrusion extend to the opposing surfaces of the two rib portions.

7. The electrical connection assembly according to claim 6, wherein
a plurality of the protrusions are provided at intervals along the direction from the connection portion towards the plugging portion.

8. The electrical connection assembly according to claim 1, wherein
a vertical height of the rib portion to the connection surface is larger than or equal to a diameter of the conductor.

9. The electrical connection assembly according to claim 1, wherein
an end of the connection portion opposite to the plugging portion is provided with a transition portion extending in a direction away from the weld surface.

10. The electrical connection assembly according to claim 9, wherein
the conductor further comprises an insulation layer sleeved on an outer periphery of the conductor, the conductor is welded to the weld surface after a part of the insulation layer is removed, and an end of the insulation layer is located in a region where the transition portion is located.
